# EUROPEAN PATENT SPECIFICATION

(11) **EP 0 271 836 B1**
(45) Date of publication and mention of the grant of the patent: **08.09.1993**
(21) Application number: 87118382.8
(22) Date of filing: 11.12.1987
(51) Int. Cl.: G03G 15/20, G03G 21/00

(54) **Filter for removing smoke and toner dust in electrophotographic/electrostatic recording apparatus**
Filter zum Entfernen von Tonerdampf und -staub in einem elektrofotographischen oder elektrostatischen Aufnahmegerät
Filtre pour enlever la fumée et la poussière de toner dans un appareil d'enregistrement électrophotographique ou électrostatique

(30) Priority: 16.12.1986 JP 297492/86
(43) Date of publication of application: 22.06.1988
(73) Proprietor: FUJITSU LIMITED, Kawasaki-shi, Kanagawa 211 (JP)
(72) Inventor: Tonomoto, Yoshihiro FUJITSU LTD. Patent Dep., Kawasaki-shi Kanagawa 211 (JP)
(74) Representative: Sunderland, James Harry

(56) References cited:
- FR-A- 963 621
- GB-A- 1 513 699
- US-A- 4 215 682
- PATENT ABSTRACTS OF JAPAN, vol. 7, no. 180 (P-215)[1325], 9th August 1983; & JP-A-58 83 879

## Description

The present invention relates to an air filter for removing smoke and dust generated in an image recording apparatus such as an electrophotographic or electrostatic recording apparatus. The present invention finds particularly advantageous employment for an air filter used in recording apparatus wherein a toner image is formed on a recording sheet and is fixed by a fixing means of the flash lamp type.

In an electrophotographic/electrostatic recording apparatus such as a printer, a copying machine, or the like, a toner image is formed on a recording sheet and subsequently fixed thereon by a fixing means.

In electrophotographic recording apparatus, an electrostatic latent image is formed on a photosensitive drum by optical means and developed by a developer, thereafter the latent image is transformed to a toner image on a recording sheet. In electrostatic recording apparatus, an electrostatic latent image is formed electrostatically on a membrane by a stylus electrode and is transformed to a toner image on a recording sheet. In these two types of apparatus, the fixing means, in other words, the fusing means, is almost the same.

Fixing means comprising two heat rollers is generally used, whereby a recording sheet with a toner image thereon is moved between two rollers and the toner image is fixed (fused on the recording sheet) by heat, under the pressure of the rollers. However, with increased recording speeds, fixing means utilizing a method of flash lamp heating has been introduced, without the use of heat rollers. With this method smoke is generated in the fixing process and it becomes necessary to provide an air filter, for removing smoke and other dust, such as toner particles, along an exhaust duct between the fixing means and an exhaust blower.

When toner particles, generally comprising dye and resin materials, are fused in the fixing process, they evaporate into several kinds of gases, resulting in the formation of smoke.

In previous proposals, the smoke thus generated is removed by an air filter. The air filter is constituted of at least one or preferably a plurality of filter units, each filter unit being formed of glass fiber, synthetic fiber or the like and having a different size of opening. The filter units are stacked in cascade in the path of flowing exhaust air in order of opening size, the unit having the largest opening size being located at an upstream side of the air flow.

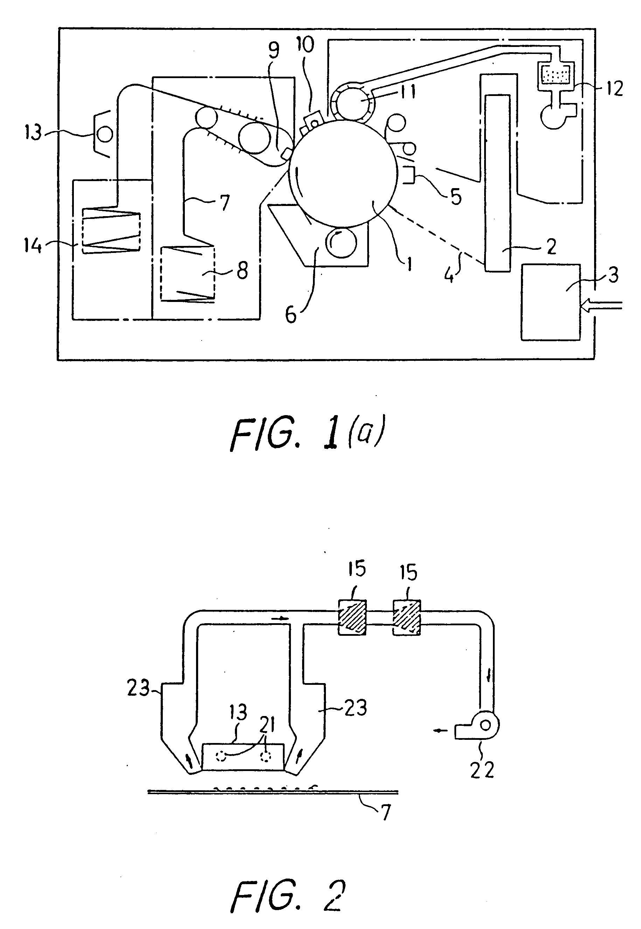

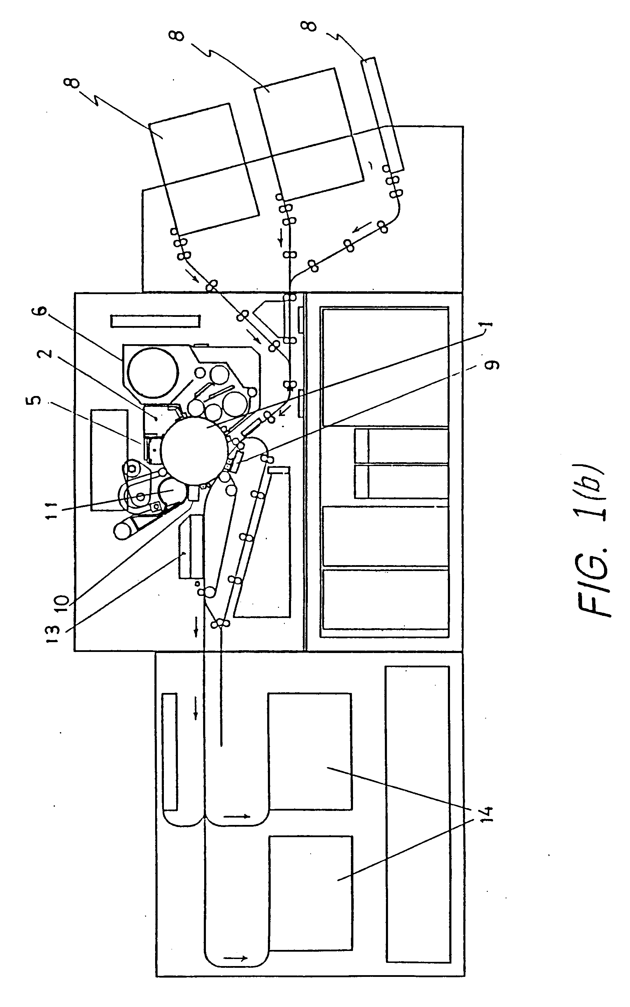

Figs. 1(a) and 1(b) are respective schematic cross-sectional illustrations of laser printers, for assistance in explanation of (Fig. 1(a)) electrophotographic recording technology and (Fig. 1(b)) the location at which an air filter is installed.

In Fig. 1(a), a rotatable photosensitive drum 1, the surface thereof being coated with photosensitive material, is provided. An optical unit 2, including a laser source, a lens unit, and a reflector (these items are not shown) irradiates light 4 onto the surface of drum 1 from one end to the other end thereof, the light being controlled by a signal, corresponding to an image to be printed, supplied from a buffer unit 3, which is connected to a CPU or a like device.

The photosensitive drum 1 is electrostatically charged uniformly by a corona charger 5 before the drum rotates to the exposure position for light 4 from optical unit 2. In this process, the charged surface of drum 1 forms an electrostatic latent image corresponding to the printing image. As the drum is further rotated, its surface is subjected to the action of a developing unit 6, which contains toner particles, whereby the electrostatic latent image is transformed into a toner image. With further rotation of drum 1, the toner image is transferred onto a recording sheet 7, which is fed from a hopper 8 and transported to a transferring unit 9. The surface of drum 1 is then further rotated and exposed to a discharger 10, and then remaining toner particles are brushed off by a cleaning brush 11 and they are recovered in a collecting unit 12. Recording sheet 7, having the transferred toner image thereon, is further moved to a fixing unit 13, in other words a fuser, and stored in stacker 14.

The fundamental structure of the apparatus of Fig. 1(b) is almost the same as that of the apparatus shown in Fig. 1(a), except that cut sheets are used as recording sheets (rather than a continuous recording sheet). Reference signs used in Fig. 1(b) indicate the same or similar items as shown in Fig. 1(a). In Fig. 1(b), hoppers 8 store cut sheets of different sizes, and cut sheets are transported, as indicated by the arrows, to transferring unit 9 and then to fixing unit 13 and finally to stacker 14.

A fixing unit 13 of a conventional heat roller type is utilized in electrophotographic recording apparatus having a low printing speed. In such a case, an air filter is not needed (in Figs. 1, an air filter is not shown); it is sufficient to exhaust warmed air out of the apparatus. When, however, high speed printing is required, a fixing unit of a flash lamp type is utilized and an air filter has to be installed in an air exhaust path to remove smoke generated in the fixing process.

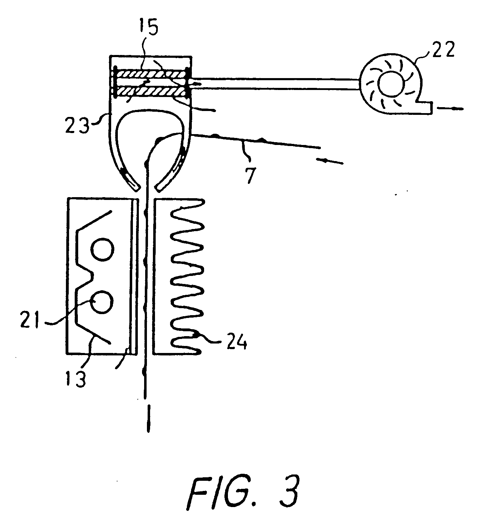

With previous proposals, an air filter is installed for example as illustrated in Fig. 2 or Fig. 3.

The Fig. 2 arrangement is disclosed in Japanese Patent Application Kokai (11) 56-54467, (43) 14.5.1981 by H. Ishikawa et al, and the Fig. 3 arrangement is disclosed in Japanese Patent Application Kokai 58-83879, 19.5.1983 by Y. Ito et al.

In Fig. 2, recording sheet 7 is exposed to fixing unit 13, comprising two flash lamps 21, and smoke is sucked into a duct 23 by a blower 22. Two air filters 15 are provided in cascade in the flow path of the exhaust air.

In Fig. 3, a cylindrical air filter 15 is provided above a fixing unit 13 and a radiator 24. A recording sheet 7 enters duct 23 through an opening on the right side thereof (in the Figure) runs downwards and vertically between fixing unit 13 and heat radiator 24. Minute smoke particles are captured in air filter 15.

However, in electrophotographic/electrostatic recording apparatus, especially, utilizing toner developer of a dry type as explained above, a considerable quality of toner particle are to be found floating in the ambient atmosphere of the apparatus. These toner particles, the size of which is usually greater than that of smoke particles, are also attracted to the air filter and clog up the filter openings and increase the resistance of the filter against air flow. As a result, the function of the air filter deteriorates rapidly in a very short time.

An embodiment of the present invention can provide an air filter which can endure for a longer period of operation in filtering air including smoke and toner dust.

An embodiment of the present invention can provide an air filter having substantially the same size and having a structure similar in some respects to previously proposed air filters.

In an embodiment of the present invention a filter unit is utilized which comprises fibrous dielectric material coated with an electrostatically chargeable agent thereon, or fibrous dielectric material embedding electrostatic charges therein. This filter unit has a specific opening size, in order to allow dust particles without an electric charge to flow freely therethrough, the particle size being smaller than the opening size of the filter unit. This filter unit is stacked together with other, conventional, filter units, having no electrostatic charge therein, on the air entry side of the filter stack.

Fibrous dielectric material coated with an electrostatically chargeable agent is fabricated by coating a solution of chemical material (dissolved) solved into methyl ethyl ketone on fibrous dielectric material and thereafter drying. As the chemical material, vinylidene fluoride is used for a positively charged toner (when positively charged toner particles are to be filtered out), and styrene acrylic is used for a negatively charged toner (when negatively charged toner particles are to be filtered out). The fibrous dielectric material described above is charged by friction with toner particles or molecules of flowing air during operation.

Fibrous dielectric material embedding electrostatic charges is often called "fibrous electret". Generally, fibrous electret is defined as a permanently charged or polarized piece of dielectric material produced by heating the material and placing it in a strong electric field during cooling. However, many different methods can be used for manufacturing fibrous dielectric material embedding electrostatic charges, wherein the name "fibrous electret" is not used.

Fibrous material embedding electrostatic charges is referred to in Japanese Patent Application Kokai such as (11) 54-113900, (43) 5.9.1979; 55-67313, 21.5.1980; 60-168510, 2.9.1985; 60-168511, 2.9.1985; 61-46215, 6.3.1986; etc.

Hereinafter, fibrous dielectric material coated with an electrostatically chargeable agent or fibrous dielectric material embedding electrostatic charges will be referred briefly as "electrostatically charged fibrous material".

When a filter unit of electrostatically charged fibrous material is arranged at the first stage of an air filter, it attracts electrostatically charged toner particles of opposite polarity. A substantial proportion of toner particles in the air passing to the filter is removed therefrom, and smoke, the particle size thereof being smaller than that of toner particles, enters into subsequent filter units or stages where smoke is removed.

Reference is made, by way of example, to the accompanying drawings, in which:-
Figs. 1(a) and 1(b) are respective schematic cross-sectional diagrams of laser printers, for assistance in explanation of electrophotographic recording apparatus and the positioning of an air filter therein;
Figs. 2 and 3 are schematic diagrams illustrating previously proposed air filter arrangements, in particular illustrating the filter position relative to a fixing unit and an exhaust duct;

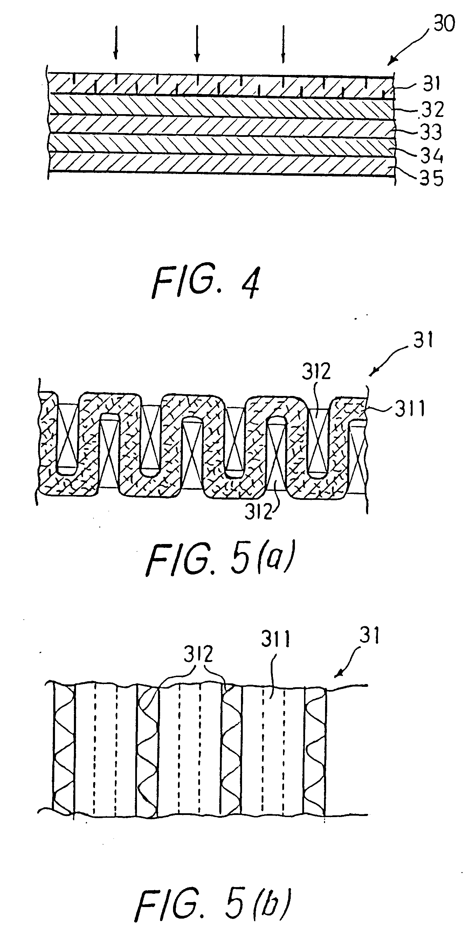

Fig. 4 is a schematic partial cross section of an air filter embodying the present invention;
Figs. 5(a) and 5(b) are a sectional view and top view respectively, to a scale larger than that of Fig. 4, of a first filter unit of Fig. 4;

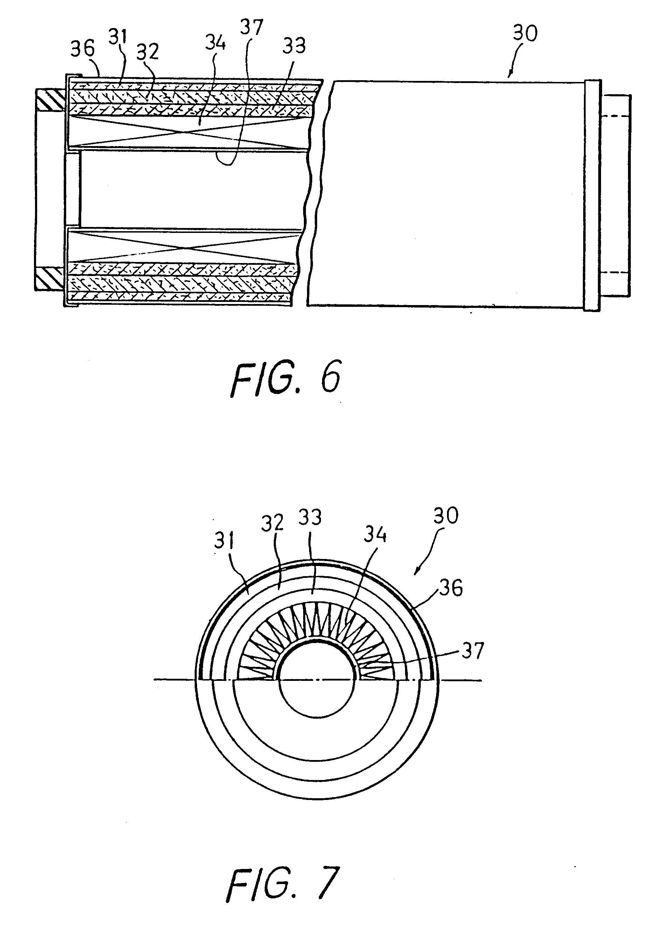

Fig. 6 is a schematic side elevational view, partially in cross section, of a cylindrical air filter embodying the present invention,
Fig. 7 is a schematic end view, partially in cross section, of the air filter of Fig. 6;

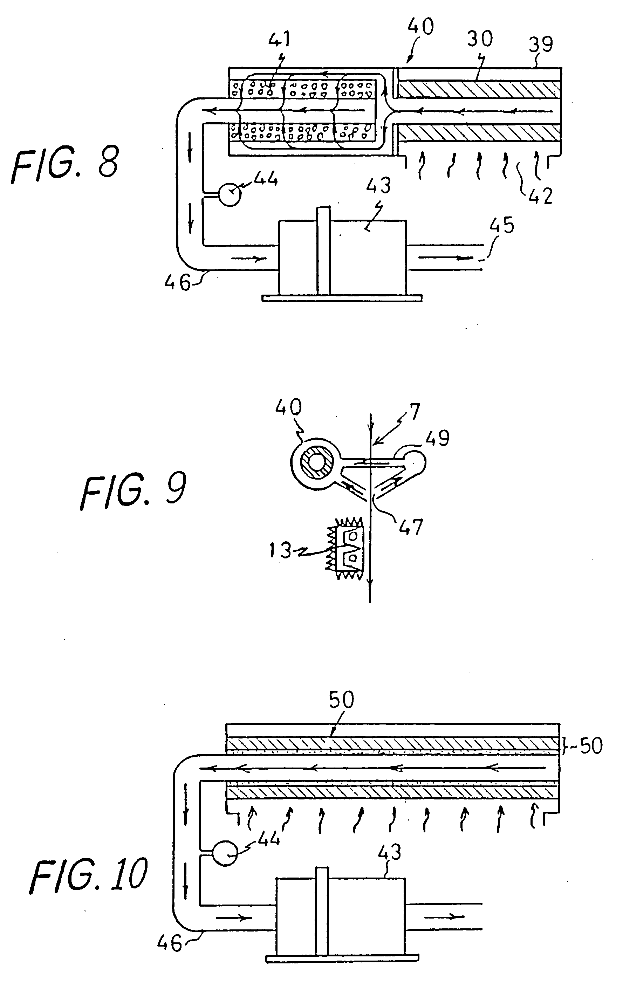

Fig. 8 illustrates schematically the arrangement of a filter assembly embodying the present invention;
Fig. 9 illustrates schematically the relative arrangement of a filter assembly embodying the present invention, a fixing unit, and a recording sheet in recording apparatus;
Fig. 10 schematically illustrates another type of filter assembly embodying the present invention, in which a deodorization filter is integrated with an air filter for dust;

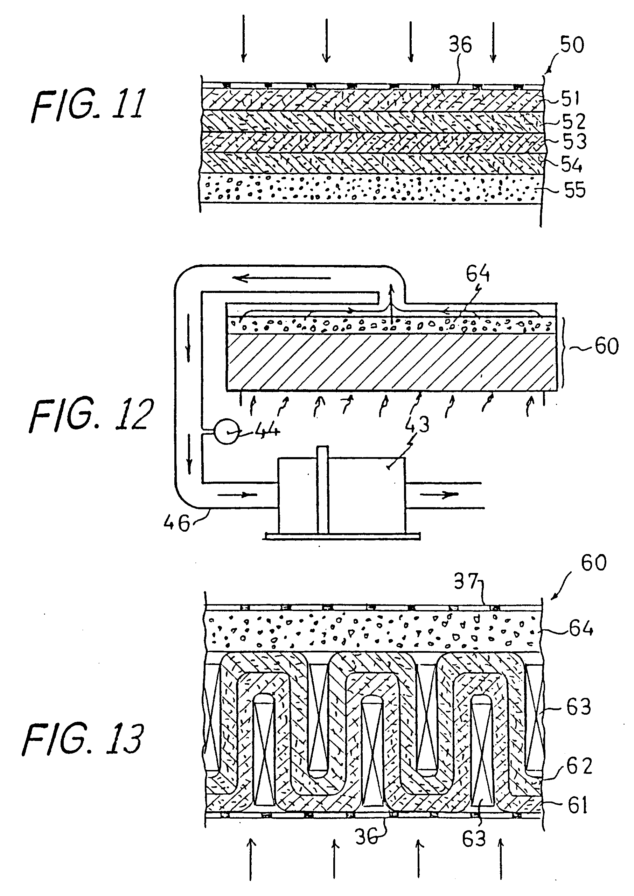

Fig. 11 is a schematic partial cross-sectional view of a cylindrical filter assembly as shown in Fig. 10;
Fig. 12 schematically illustrates still another arrangement of a filter assembly embodying the present invention, in which a planar type of filter unit is utilized;
Fig. 13 is a schematic partial cross-sectional view of the filter assembly shown in Fig. 12, to a scale larger than that of Fig. 12; and

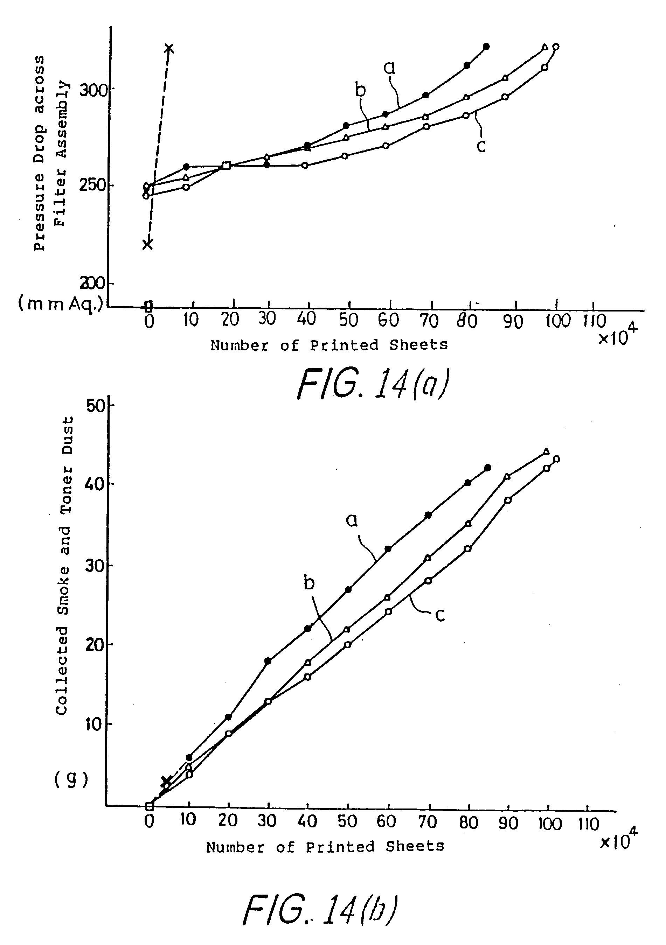

Figs. 14(a) and 14(b) are graphs illustrating experimental results obtained using a filter assembly embodying the present invention ; Fig. 14(a) illustrates relationship between number of printing sheets and pressure drop across the filter assembly, and Fig. 14(b) illustrates relationship between number of printing sheets and weight of the collected smoke and dust.

For a basic explanation of an embodiment of the present invention, reference will be made to Fig. 4 and Figs. 5(a) and 5(b).

Fig. 4 shows a partial cross section of an air filter 30 embodying the present invention. Air filter 30 consists of five filter units 31 to 35. Each stacked filter unit is assumed to be flat, and air including smoke and toner dust flows into air filter 30 from above (in the Figure), passes through filter units 31 to 35 and is exhausted. Figs. 5(a) and 5(b) show an enlarged sectional view and top view respectively of first filter unit 31.

The first filter unit 31 of air filter 30 comprises a folded sheet 311 made of electrostatically charged fibrous material (the sheet is folded in order to obtain a wider or more extensive filter surface) and separators 312, of corrugated metal sheet. Separators 312 are inserted between waves of folded sheet 311, arranged in parallel with each other. Each of the second to fifth filter units 32 to 35 is made of conventional fibrous material such as glass fiber or synthetic fiber having no electrostatic charge, and those units are stacked or laminated in the order of the specified opening sizes of the filter units. The filter unit on the outlet side (the fifth filter unit 35 in Fig. 4) has the smallest opening size.

If toner particles are charged positively during a recording operation, first filter unit 31 is made of electrostatically charged fibrous material capable of attracting positive toner particles, fibrous material being coated with vinylidene fluoride solution or embedding electrostatic charges of negative polarity. If toner particles are charged negatively, the fibrous material used is coated with styrene acrylic solution or embedding electrostatic charges of positive polarity. During operation, most of the toner particles are attracted to the wide surface of folded sheet 311, and the air from first filter unit 31 including smoke and the remaining toner flows into second filter unit 32. Smoke particles are filtered out, in order of particle size, during flow to the fifth filter unit 35.

Fig. 6 is a side elevational view, partially in cross section, of a cylindrical air filter 30 embodying the present invention. Fig. 7 is an end view, partially in cross section, of the air filter of Fig. 6. An outermost filter unit 31 of electrostatically charged fibrous material, in accordance with an embodiment of the present invention, is utilized and toner particles of opposite polarity are attracted thereto. A second filter unit 32 and a third filter unit 33 are composed of conventional glass fiber or synthetic fiber. Filter unit 32 is arranged adjacent to the inside surface of filter unit 31, and filter unit 33 is arranged adjacent to the inside surface of filter unit 32. Further, a fourth filter unit 34, of sheet filter material formed in a corrugated fashion, is arranged inside filter unit 33. These four filter units make up air filter 30 and are supported by two aluminum lath cylinders 36 and 37, each lath having a large mesh size.

When a toner of an average particle size of 10 micron is used for developing, the respective filter units are specified to have opening sizes such as 10 to 20 microns for filter unit 31, 5 to 10 microns for filter size 32, 5 microns for filter unit 33 and less than 1 micron for filter unit 34. Herein, the opening size of a filter (filter unit) is defined such as that the most part of dust particles having a size larger than the above specified value would be filtered out.

Fig. 8 illustrates schematically the arrangement of air filter 30 in a filter system installed in an electrophotographic/electrostatic recording apparatus. Air filter 30 is disposed in a casing 39 together with a deodorization filter 41 arranged axially in series, the two filters forming a filter assembly 40. Casing 39 has an opening 42 through which ambient air including smoke and toner dust is drawn in when the filter system is driven by a blower 43. Air flows into air filter 30 from a lower portion of cylindrical surface of casing 39. After smoke and dust are removed, the air flows into an adjacent chamber or space, for deodorization, along paths indicated by arrows. Deodorization is achieved when air flows through deodorization filter 41 composed of activated carbon particles. Filtered air is discharged from an outlet 45 of blower 43 to the outside of the apparatus. A pressure sensor 44 is provided along the exhaust duct 46, and it functions to stop printing operation when air filter 30 is clogged with smoke and toner dust.

An example of an arrangement of the filter system with respect to fixing unit 13 of Fig. 1(a) is illustrated in Fig. 9. Recording sheet 7 comes down vertically and its left side surface is irradiated by flash lamps in fixing unit 13. Heated ambient air including smoke and toner dust goes upwardly, and is sucked into inlets 47 disposed on both sides of recording sheet 7 and flows into filter assembly 40 through connecting duct 49.

Fig. 10 shows an arrangement using another type of filter assembly 50, in which a deodorization filter is integrated with an air filter for smoke and toner dust. The structure of the filter assembly is illustrated in more detail in Fig. 11, which shows a partial cross sectional view of a wall portion of the cylindrical filter assembly 50. Aluminum lath structure 36 and the structures of the four illustrated filter units 51 to 54 are almost the same as is shown in Fig. 6. Inside these filter units, a deodorization filter 55 is provided.

Fig. 12 shows another filter arrangement, for use in a case in which a wider or more extensive filter surface is required, and in which a planar type of filter assembly 60 is employed. A partial cross-sectional view of the filter assembly, to a larger scale, is shown in Fig. 13. Filter assembly 60 is also an integrated type supported by two aluminum lath structures 36 and 37 and comprises an air filter consisting of a filter unit 61 of electrostatically charged fibrous material and a filter unit 62 of conventional glass fiber. The filter assembly 60 further comprises planar deodorization filter 64. Air enters the filter assembly from the lower side in the Figure. Filter units 61 and 62 are laminated and then folded using separator 63 of metal sheet.

The three types of filter assembly shown in Figs. 8, 10 and 12 may be selectively used depending on the recording speed of the apparatus involved. When high recording speed is required, it is preferred to apply a filter assembly such as the Fig. 12 type, because it is easy to design the filter assembly to have a wider or more extensive surface. In the three types of filter assembly, a first filter unit, such as the units 31, 51 or 61, is made of electrostatically charged fibrous material. Air drawn into the filter assembly, including smoke and toner dust, is filtered first by a first filter unit, 31, 51 or 61 respectively, and toner particles, the size thereof being comparatively larger than that of smoke particles, are attracted by the electrostatic force of the first filter unit and adhere to that unit. Air, including smoke and remaining uncollected toner dust, can easily penetrate through openings formed by separating metal sheet 312 or 63 such as shown in Figs. 5(a), 5(b) or Fig. 13 respectively, and reach the surface of the second filter unit. Because most of toner particles are collected by the first filter unit, the occurrence clogging phenomena for the subsequent filter units are remarkably reduced. Durability of the air filter can be much improved.

Experimental results obtained using a filter assembly embodying the present invention are shown in Figs 14(a) and 14(b), where Fig. 14(a) illustrates relationship between number of printed sheets and pressure drop across the filter assembly, and Fig. 14(b) relationship between number of printed sheets and the weight of the collected smoke and toner dust. The experiment was carried out three times, as indicated by curves a, b and c. After approximately one million sheets of printing, more than 40 grams of smoke and toner dust are collected and pressure drop across the filter shows an increase from about 250 mm Aq. to 330 mm Aq. On the other hand, when the previously proposed filter assembly is used, pressure drop rises rapidly from 220 mm Aq. to 320 mm Aq. after only about 50,000 sheets, with a very little collection of smoke and toner dust (shown by the broken line and cross marks in Fig. 14(a)).

Three filter assemblies embodying the present invention have been described in some detail. It will be understood, however, that the present invention may be embodied in other specific forms, for example combined with other types of filter units, without departing from the essential characteristics of the invention. The present invention has a specific feature in that the first filter unit is made of electrostatically charged fibrous material in order to collect charged dust particles at the front end of the filter assembly.

In an electrophotographic/electrostatic recording apparatus, especially such apparatus providing a high speed of recording, a toner image on a recording sheet is fused onto the sheet by a flash lamp in a fixing unit, and smoke is generated thereby. Smoke and toner dust comprised in ambient air should be removed before the air is exhausted out of the apparatus, by passing the air through an air filter. The present invention provides an air filter structure comprising a plurality of filter units, wherein a first filter unit made of electrostatically charged fibrous material is utilized at the entrance side of the air filter. The first filter unit has comparatively a larger opening size (for example, at least equal to the average toner particle size) and attracts and removes toner particles charged with the opposite polarity to that of the electrostatically charged fibrous material. Therefore, the air, a substantial part of toner dust being removed therefrom, can more easily enter into the following filter units for removal of smoke, resulting in a prolonged endurance of the air filter.

## Claims

1. An air filter for removing smoke and toner dust from air in an electrophotographic/electrostatic recording apparatus, wherein a toner image is formed on a recording sheet and is fixed thereon by fusing the toner image, said air filter comprising:
a first filter unit (31; 51; 61) disposed at the air inlet side of the air filter (30), and at least a second filter unit (32, 33, 34, 35; 52, 53, 54; 62) disposed at the outlet side of said first filter unit;
characterised in that:-
the first filter unit (31; 51; 61) comprises electrostatically charged fibrous material (311) having a characteristic of attracting charged toner particles, the first filter unit (31; 51; 61) having a specified opening size approximately equal to or larger than average toner size; and
the second filter unit (32, 33, 34, 35; 52, 53, 54; 62) is made of fibrous material without an electrostatic charge, and having an opening size smaller than that of the first filter unit.

2. An air filter according to claim 1, wherein said electrostatically charged fibrous material (311) comprises fibrous dielectric material with a dried coating of a solution of vinylidene fluoride in methyl ethyl ketone, and attracts positively charged toner.

3. An air filter according to claim 1, wherein said electrostatically charged fibrous material (311) comprises fibrous dielectric material with a dried coating of a solution of styrene acrylic in methyl ethyl ketone, and attracts negatively charged toner.

4. An air filter according to claim 1, wherein said electrostatically charged fibrous material (311) has electrostatic charges embedded therein by an electrical means.

5. An air filter according to any preceding claim, wherein the air filter further comprises at least one additional filter unit (33, 34, 35; 53, 54) disposed at the outlet side of the second filter unit (32, 52), the additional filter unit being of fibrous material without an electrostatic charge, and having an opening size of smaller than that of said second filter unit.

6. An air filter according to claim 1, wherein the first filter unit (31; 51; 61) has a folded shape, for example with a corrugated sheet fold separator (312).

7. An air filter according to any preceding claim, wherein the air filter has a cylindrical structure, the filter units being arranged coaxially, the first filter unit (31; 51) being outermost, whereby air enters the filter from the outermost surface of the air filter and is exhausted from the innermost surface thereof.

8. An air filter according to any one of claims 1 to 6, wherein the air filter units (31, 32, 33, 34, 35; 61, 62) have a planar structure.

9. An air filter assembly, comprising an air filter, for removing smoke and toner dust, as claimed in any preceding claim, and further comprising a deodorization filter (41; 55; 64), the deodorization filter comprising activated carbon particles and being disposed at the side of the air filter assembly from which air is exhausted out of the filter assembly.

10. An air filter assembly according to claim 9, comprising an air filter as claimed in claim 7, wherein the deodorization filter (41) also has a cylindrical structure, and the filter units (31, 32, 33, 34, 35) of the air filter and the deodorization filter (41) are arranged in cascade, coaxially but displaced one from the other along their mutual axis, whereby the air enters the assembly from the outside surface of the first filter unit (31) of the air filter and penetrates inwardly through the filter units and then flows to the outside surface of the deodorization filter (41) and is exhausted from inside surface thereof.

11. An air filter assembly according to claim 9 comprising an air filter as claimed in claim 7, wherein the deodorization filter (55) is arranged coaxially inside the filter units (51, 52, 53, 54) of the air filter, whereby the air enters from the outside surface of the filter units and is exhausted from the inside surface of the deodorization filter.

12. An electrophotographic/electrostatic recording apparatus comprising an air filter as claimed in any of claims 1 to 8, or an air filter assembly as claimed in any of claims 9, 10 and 11.

## Patentansprüche

1. Luftfilter zur Beseitigung von Rauch und Tonerstaub aus der Luft in einem elektrofotografischen/elektrostatischen Aufzeichnungsgerät, in dem ein Tonerbild auf einem Aufzeichnungsblatt gebildet und darauf durch Aufschmelzen des Tonerbilds fixiert ist, wobei genannter Luftfilter
eine erste Filtereinheit (31; 51; 61), angeordnet an der Lufteingangsseite des Luftfilters (30) und
mindestens eine zweite Filtereinheit (32, 33, 34, 35; 52, 53, 54; 62) angeordnet an der Ausgangsseite genannter erster Filtereinheit enthält,
dadurch gekennzeichnet, daß
die erste Filtereinheit (31; 51; 61) ein elektrostatisch geladenes Fasermaterial (311) enthält, das die Eigenschaft der Anziehung geladener Tonerpartikel besitzt, die erste Filtereinheit (31; 51; 61) eine spezifische Öffnungsgröße aufweist, die ungefähr gleich oder größer als die durchschnittliche Tonergröße ist; und
die zweite Filtereinheit (32, 33, 34, 35; 52, 53, 54; 62) aus Fasermaterial ohne elektrostatische Ladung gefertigt ist und diese eine Öffnungsgröße kleiner als die der ersten Filtereinheit aufweist.

2. Luftfilter gemäß Anspruch 1, in dem genanntes elektrostatisch geladenes Fasermaterial (311), fasriges dielektrisches Material mit einem getrockneten Überzug aus einer Lösung von Vinylidenfluorid in Methylethylketon beinhaltet und positiv geladenen Toner anzieht.

3. Luftfilter gemäß Anspruch 1, in dem genanntes elektrostatisch geladenes Fasermaterial (311), fasriges dielektrisches Material mit einem getrockneten Überzug aus einer Lösung von Styrolacrylsäure (styrene acrylic) in Methylethylketon beinhaltet und negativ geladenen Toner anzieht.

4. Luftfilter gemäß Anspruch 1, in dem genanntes elektrostatisch geladenes Fasermaterial (311) elektrostatische Ladungen aufweist, die in ihm durch elektrische Mittel eingebettet sind.

5. Luftfilter gemäß einem der vorstehenden Ansprüche, in dem der Luftfilter weiterhin mindestens eine zusätzliche Filtereinheit (33, 34, 35; 53, 54), angeordnet an der Ausgangsseite der zweiten Filtereinheit (32, 52), beinhaltet, die zusätzliche Filtereinheit aus Fasermaterial ohne elektrostatische Ladung besteht und eine Öffnungsgröße kleiner als die der genannten zweiten Filtereinheit aufweist.

6. Luftfilter gemäß Anspruch 1, in dem die erste Filtereinheit (31; 51; 61) eine gefaltete Gestalt, z.B. mit einem gewellten Faltblattseparator (312), aufweist.

7. Luftfilter gemäß einem der vorstehenden Ansprüche, in dem der Luftfilter einen zylindrischen Aufbau aufweist, die Filtereinheiten koaxial angeordnet sind, die erste Filtereinheit (31; 51) die äußerste ist, wobei die Luft den Filter durch die äußerste Oberfläche des Filters durchtritt und durch seine innerste Oberfläche abströmt.

8. Luftfilter gemäß einem der Ansprüche 1 bis 6, in dem die Luftfiltereinheiten (31, 32, 33, 34, 35; 61, 62) einen planaren Aufbau aufweisen.

9. Luftfilteranordnung mit einem Luftfilter zur Beseitigung von Rauch und Tonerstaub, wie in einem der vorstehenden Ansprüche beansprucht, und ferner einen Luftverbesserungsfilter (41; 55; 64) umfassend, welcher Luftverbesserungsfilter aktivierte Kohlenstoffpartikel enthält, und auf der Seite der Luftfilteranordnung angeordnet ist, von welcher die Luft aus der Filteranordnung abgeführt wird.

10. Luftfilteranordnung gemäß Anspruch 9 mit einem Luftfilter, wie in Anspruch 7 beansprucht, in dem der Luftverbesserungsfilter (41) auch einen zylindrischen Aufbau aufweist und die Filtereinheiten (31, 32, 33, 34, 35) des Luftfilters und des Luftverbesserungsfilters (41) koaxial in Kaskade, aber entfernt voneinander entlang ihrer gegenseitigen Achsen angeordnet sind, wobei die Luft in die Anordnung durch die äußere Oberfläche der ersten Filtereinheit (31) der Luftfilteranordnung eintritt, die Filtereinheiten einwärts durchdringt und dann durch die äußere Oberfläche des Luftverbesserungsfilters (41) fließt und von seiner inneren Oberfläche abgeführt wird.

11. Luftfilteranordnung gemäß Anspruch 9, mit einem Luftfilter, wie in Anspruch 7 beansprucht, in dem der Luftverbesserungsfilter (55) koaxial innerhalb der Filtereinheiten (51, 52, 53, 54) des Luftfilters angeordnet ist, wodurch die Luft durch die äußere Oberfläche der Filtereinheiten eintritt und von der inneren Oberfläche des Luftverbesserungsfilters abgeführt wird.

12. Elektrofotografisches/elektrostatisches Aufzeichnungsgerät mit einem Luftfilter, wie in einem der Ansprüche 1 bis 8 beansprucht, oder einer Luftfilteranordnung, wie in einem der Ansprüche 9,10 und 11 beansprucht.

## Revendications

1. Filtre à air destiné à retirer la fumée et la poussière de développateur contenues par l'air dans un appareil d'enregistrement électrophotographique-électrostatique, dans lequel une image de développateur est formée sur une feuille d'enregistrement et est fixée sur celle-ci par fusion de l'image de développateur, le filtre à air comprenant :
une première unité de filtration (31 ; 51 ; 61) disposée du côté d'entrée d'air du filtre à air (30), et au moins une seconde unité de filtration (32, 33, 34, 35 ; 52, 53, 54 ; 62) placée du côté de sortie de la première unité de filtration,
caractérisé en ce que
la première unité de filtration (31 ; 51 ; 61) comporte une matière fibreuse chargée électrostatiquement (311) ayant pour caractéristique d'attirer les particules chargées de développateur, la première unité d filtration (31 ; 51 ; 61) ayant une dimension spécifiée d'ouvertures qui est approximativement égale à la dimension moyenne du développateur ou supérieure à cette dimension, et
la seconde unité de filtration (32, 33, 34, 35 ; 52, 53, 54 ; 62) est formée d'une matière fibreuse sans charge électrostatique et a une dimension d'ouvertures inférieure à celle de la première unité de filtration.

2. Filtre à air selon la revendication 1, dans lequel la matière fibreuse chargée électrostatiquement (311) est une matière diélectrique fibreuse ayant un revêtement séché d'une solution de fluorure de vinylidène dans de la méthyléthylcétone, et elle attire le développateur chargé positivement.

3. Filtre à air selon la revendication 1, dans lequel la matière fibreuse chargée électrostatiquement (311) est une matière diélectrique fibreuse ayant un revêtement séché d'une solution de matière acrylique et de styrène dans de la méthyléthylcétone, et elle attire le développateur chargé négativement.

4. Filtre à air selon la revendication 1, dans lequel la matière fibreuse chargée électrostatiquement (311) a des charges électrostatiques enfouies à l'intérieur par un dispositif électrique.

5. Filtre à air selon l'une quelconque des revendications précédentes, dans lequel le filtre à air comporte en outre au moins une unité supplémentaire de filtration (33, 34, 35 ; 53, 54) disposés du côté de la sortie de la seconde unité de filtration (32, 52), l'unité supplémentaire de filtration étant formée d'une matière fibreuse sans charge électrostatique, et ayant une dimension d'ouvertures inférieure à celle de la seconde unité de filtration.

6. Filtre à air selon la revendication 1, dans lequel la première unité de filtration (31 ; 51 ; 61) a une forme plissée, ayant par exemple un séparateur plissé à feuille ondulée (312).

7. Filtre à air selon l'une quelconque des revendications précédentes, dans lequel le filtre à air a une structure cylindrique, les unités de filtration étant placées coaxialement, la première unité de filtration (31 ; 51) étant la plus à l'extérieur, si bien que l'air pénètre dans le filtre par la surface externe du filtre à air et est évacué par sa surface interne.

8. Filtre à air selon l'une quelconque des revendications 1 à 6, dans lequel les unités de filtration d'air (31, 32, 33, 34, 35 ; 61, 62) ont une structure plane.

9. Ensemble de filtration d'air, comprenant un filtre à air destiné à retirer la fumée et la poussière de développateur selon l'une quelconque des revendications précédentes, comprenant en outre un filtre (41 ; 55 ; 64) de désodorisation qui contient des particules de charbon actif et qui est placé du côté de l'ensemble de filtration d'air par lequel l'air est évacué de l'ensemble de filtration.

10. Ensemble de filtration d'air selon la revendication 9, comprenant un filtre à air selon la revendication 7, dans lequel le filtre de désodorisation (41) a aussi une structure cylindrique, et les unités de filtration (31, 32, 33, 34, 35) du filtre à air et le filtre de désodorisation (41) sont disposés en cascade, coaxialement, mais en étant décalés les uns par rapport aux autres le long de leur axe mutuel, si bien que l'air pénètre dans l'ensemble par la surface externe de la première unité de filtration (31) du filtre à air et circule vers l'intérieur dans les unités de filtration puis vers la surface externe du filtre de désodorisation (41) et est évacué par la surface interne de ce filtre.

11. Ensemble de filtration d'air selon la revendication 9, comprenant un filtre à air selon la revendication 7, dans lequel le filtre de désodorisation (55) est placé coaxialement dans les unités de filtration (51, 52, 53, 54) du filtre à air, si bien que l'air pénètre par la surface externe des unités de filtration et est évacué par la surface interne du filtre de désodorisation.

12. Appareil d'enregistrement électrophotographique-électrostatique comprenant un filtre à air selon l'une quelconque des revendications 1 à 8, ou un ensemble de filtration d'air selon l'une quelconque des revendications 9, 10 et 11.
